# EUROPÄISCHE PATENTSCHRIFT

(11) **EP 4 119 212 B1**
(45) Veröffentlichungstag und Bekanntmachung des Hinweises auf die Patenterteilung: **15.05.2024**
(21) Anmeldenummer: 22179978.6
(22) Anmeldetag: 20.06.2022
(51) Int. Cl.: B01D 29/23, D06F 39/10

(54) **FILTERVORRICHTUNG FÜR EIN WASSERFÜHRENDES HAUSHALTSGERÄT, WASSERFÜHRENDES HAUSHALTSGERÄT MIT EINER FILTERVORRICHTUNG UND VERFAHREN ZUM FILTERN VON WASSER MIT EINER FILTERVORRICHTUNG**
FILTER DEVICE FOR A WATER-CONDUCTING DOMESTIC APPLIANCE, WATER-CONDUCTING DOMESTIC APPLIANCE WITH A FILTER DEVICE AND METHOD FOR FILTERING WATER WITH A FILTER DEVICE
DISPOSITIF FILTRE POUR UN APPAREIL ÉLECTROMÉNAGER À CIRCULATION D'EAU, APPAREIL ÉLECTROMÉNAGER À CIRCULATION D'EAU DOTÉ D'UN DISPOSITIF FILTRE ET PROCÉDÉ DE FILTRAGE DE L'EAU À L'AIDE D'UN DISPOSITIF FILTRE

(30) Priorität: 13.07.2021 DE 102021207442
(43) Veröffentlichungstag der Anmeldung: 18.01.2023
(73) Patentinhaber: E.G.O. Elektro-Gerätebau GmbH, 75038 Oberderdingen (DE)
(72) Erfinder: Di Maggio, Antonio, 74193 Schwaigern (DE); Schaumann, Uwe, 75038 Oberderdingen (DE)
(74) Vertreter: Patentanwälte Ruff, Wilhelm, Beier, Dauster & Partner mbB

(56) Entgegenhaltungen:
- US-A- 3 305 093
- US-A1- 2004 149 666
- US-B1- 6 402 962

## Beschreibung

### Anwendungsgebiet und Stand der Technik

Die Erfindung betrifft eine Filtervorrichtung für ein wasserführendes Haushaltsgerät, ein wasserführendes Haushaltsgerät mit einer solchen Filtervorrichtung sowie ein Verfahren zum Filtern von Wasser in einer Filtervorrichtung eines solchen wasserführenden Haushaltsgeräts.

Es ist bekannt aus der DE 10 2019 219 054 B3, eine Filtervorrichtung in einem wasserführenden Haushaltsgerät wie beispielsweise einer Waschmaschine vorzusehen. Diese Filtervorrichtung soll Verunreinigungen und vor allem Mikrofasern aus dem Wasser herausfiltern, damit diese nicht in das Abwasser gelangen können und somit zur Umweltschädigung beitragen. Die dortige Filtervorrichtung ist dazu ausgebildet, aus der Waschmaschine herausgenommen zu werden und entweder von dem gesammelten Filtrat gereinigt zu werden oder mitsamt dem gesammelten Filtrat entsorgt zu werden.

Aus der WO 2019/081014 A1 ist es bekannt, in einer Waschmaschine Mikrofasern aus dem Wasserkreislauf mittels einer Filtervorrichtung herauszufiltern und als Filtrat zu sammeln. Dabei kann die Filtervorrichtung in einer üblichen Schublade im oberen linken Bereich der Waschmaschine angeordnet sein, um dort das Filtrat zu sammeln. Zum Entsorgen des Filtrats muss die gesamte Schublade aus der Waschmaschine entnommen werden, alternativ muss ein spezieller Sammelbehälter entnommen werden.

Aus der US 3 305 093 A geht eine Filtervorrichtung hervor mit einem Flächenfilter, der konische Form aufweist und an einer von Stützrippen gebildeten Stützstruktur anliegt. Zu filterndes Wasser strömt dabei von außen nach innen durch den Flächenfilter und durch die Stützstruktur. Mittels einer lösbaren Halteeinrichtung wird der Flächenfilter an der Stützstruktur gehalten.

Aus der US 2004/149666 A1 geht eine weitere Filtervorrichtung mit einem Beutelfilter hervor, der mittels eines übergestreiften elastischen O-Rings an einer becherartigen Stützstruktur gehalten ist. Dabei kann der Beutelfilter eine angenähert konische Form einnehmen. Durchströmendes Wasser fließt von innen nach außen durch den Beutelfilter hindurch und wird dabei gefiltert.

Aus der US 6 402 962 B1 ist eine nochmals weitere Filtervorrichtung bekannt mit einem Filterelement, das insgesamt konisch ausgebildet ist, aber Stützfinger aufweist, die von einer ringförmigen Basis ausgehen und die mit geringem schlitzförmigen Abstand zueinander verlaufen. Sie bilden einen Filter für gröbere Gegenstände, die breiter sind als der schlitzförmige Abstand zwischen zwei benachbarten Stützfingern. Über diese Struktur des Filterelements wird kein zusätzlicher Flächenfilter gebracht oder übergestülpt.

### Aufgabe und Lösung

Der Erfindung liegt die Aufgabe zugrunde, eine eingangs genannte Filtervorrichtung, ein eingangs genanntes wasserführendes Haushaltsgerät sowie ein eingangs genanntes Verfahren zu schaffen, mit denen Probleme des Standes der Technik gelöst werden können und es insbesondere möglich ist, ein Filtrieren von Wasser in dem Haushaltsgerät zu erleichtern und vorzugsweise eine Entsorgung von Filtrat zu verbessern, insbesondere wenn dieses Mikrofasern enthält.

Gelöst wird diese Aufgabe durch eine Filtervorrichtung mit den Merkmalen des Anspruchs 1, durch ein wasserführendes Haushaltsgerät mit den Merkmalen des Anspruchs 10 sowie durch ein Verfahren mit den Merkmalen des Anspruchs 13. Vorteilhafte sowie bevorzugte Ausgestaltungen der Erfindung sind in den Ansprüchen enthalten und werden im Folgenden näher erläutert. Dabei werden manche der Merkmale nur für die Filtervorrichtung, nur für das wasserführende Haushaltsgerät oder nur für das Verfahren beschrieben. Sie sollen jedoch unabhängig davon sowohl für eine Filtervorrichtung, für ein Verfahren und für ein wasserführendes Haushaltsgerät selbständig und unabhängig voneinander gelten können. Der Wortlaut der Ansprüche wird durch ausdrückliche Bezugnahme zum Inhalt der Beschreibung gemacht.

Die Filtervorrichtung weist einen Flächenfilter mit Hülsenform auf, vorteilhaft als konische Hülse. Besonders vorteilhaft weist der Flächenfilter eine umlaufende Mantelfläche auf, welche die Filterfunktion aufweist bzw. bildet. An mindestens einem Ende, vorteilhaft an beiden Enden, kann eine Verstärkung vorgesehen sein, beispielsweise als umlaufender Verstärkungsring. Diese kann dazu dienen, dem Flächenfilter an sich eine Form zu geben. Des Weiteren weist die Filtervorrichtung eine Stützstruktur für den Flächenfilter auf, auf welche der Flächenfilter im Betrieb der Filtervorrichtung bzw. des wasserführenden Haushaltsgeräts aufgesetzt ist. Während beispielsweise bei klassischen Papierfiltertüten der Marke Melitta der Flächenfilter in Form der Filtertüte in einem becherartigen Träger angeordnet ist, kann bei der Erfindung der Flächenfilter auf die Stützstruktur aufgebracht sein, aufgesteckt sein oder aufgeschoben sein. Des Weiteren weist die Filtervorrichtung ein durchströmtes Filtergehäuse auf mit einem Filtereingang und einem Filterausgang. In diesem Filtergehäuse befinden sich Flächenfilter und Stützstruktur. Dabei ist der Flächenfilter an der Stützstruktur gehalten und weist somit eine Flächenfilterform auf, die an eine Außenform der Stützstruktur angepasst ist. Dabei wird der Flächenfilter fest gehalten und von der Stützstruktur stabilisiert, insbesondere wenn er von Wasser durchströmt wird, um dieses zu filtern. Die Stützstruktur weist dabei Durchströmungsöffnungen auf, die zu dem Flächenfilter hinweisen. Die Stützstruktur weist eine zentrale Öffnung an ihrem Ende auf, durch welche Wasser strömen kann, ohne durch den Flächenfilter zu gehen. Es gibt einen ersten Durchströmungsweg für Wasser, der in die Stützstruktur hineinführt und dann durch die Durchströmungsöffnungen aus der Stützstruktur herausführt, wobei er dann unmittelbar durch den Flächenfilter hindurchgeht. Wasser, das entlang dieses ersten Durchströmungswegs strömt, wird mittels des Flächenfilters gefiltert.

Es gibt noch einen zweiten Durchströmungsweg für Wasser, der auch in die Stützstruktur hineinführt, vorteilhaft auf dieselbe Art und Weise wie der erste Durchströmungsweg, nämlich durch den Filtereingang kommend. Allerdings führt er durch die zentrale Öffnung am Ende der Stützstruktur wieder aus dieser heraus. Wasser, das entlang des zweiten Durchströmungswegs strömt, wird also nicht gefiltert, da dieser zweite Durchströmungsweg nicht mehr durch den Flächenfilter hindurchführt.

Je nachdem, ob das Wasser also entlang des ersten Durchströmungswegs oder entlang des zweiten Durchströmungswegs strömt, wird es gefiltert oder nicht. Dies wird nachfolgend noch im Detail erläutert.

Erfindungsgemäß ist die Stützstruktur hülsenartig oder rohrartig bzw. konisch umlaufend ausgebildet und wird im Wesentlichen von Stützrippen gebildet, die zwischen sich die Durchströmungsöffnungen ausbilden bzw. aufweisen. Somit verleiht die Stützstruktur dem Flächenfilter, möglicherweise zusätzlich zu den vorgenannten Rahmen, Struktur und Stabilität. Des Weiteren ist diese Stützstruktur eben gut oder sogar sehr gut wasserdurchlässig, um die Wasserdurchströmung möglichst wenig zu stören. Der Flächenfilter ist dabei außen an der Stützstruktur befestigt bzw. über diese übergestülpt oder aufgeschoben. Dabei überdeckt er die genannten Durchströmungsöffnungen und liegt außen an den Stützrippen bzw. an der Stützstruktur an. Möglicherweise kann er zusätzlich von außen angedrückt oder gehalten werden, wobei eine solche zusätzliche Halterung wiederum die Durchströmung möglichst wenig beeinträchtigen sollte, um diese Durchströmung eben optimieren zu können.

Somit wird mit der Erfindung eine Filtervorrichtung geschaffen, die einen sehr vorteilhaften Flächenfilter aufweist. Der Flächenfilter kann, insbesondere wenn er sozusagen voll oder mit Filtrat zugesetzt ist, aus der Filtervorrichtung entnommen werden bzw. von der Stützstruktur entfernt werden. So kann entweder das Filtrat alleine entsorgt werden oder der Flächenfilter zusammen mit dem Filtrat entsorgt werden. Der Flächenfilter kann aus einem Filtermaterial wie beispielsweise Papier bzw. Filterpapier, Gewebe, Gelege, Gewirke odgl., insbesondere aus Kunstfaser, bestehen. Er sollte relativ einfach und kostengünstig aufgebaut sein, damit er zusammen mit dem Filtrat entsorgt bzw. auf spezielle Art und Weise entsorgt werden kann. Dies ermöglicht einen Verzicht auf eine komplizierte und komfortable sowie möglicherweise auch kostenintensive Bearbeitung mit Trennung des Filtrats von dem Flächenfilter.

Die Stützstruktur kann vorteilhaft aus Kunststoff bestehen und insbesondere einteilig bzw. einstückig ausgebildet sein. So kann sie beispielsweise als Kunststoffspritzgussteil hergestellt sein.

In vorteilhafter Weiterbildung der Erfindung können die Stützstruktur und vor allem der Flächenfilter als sogenannter Sanderson-Filter ausgebildet sein, wie er insbesondere aus der WO 2015/123300 A1 und der WO 2013/184814 A1 bekannt ist. Auf diese Veröffentlichungen wird ausdrücklich Bezug genommen und deren Inhalt bezüglich der Realisierung eines solchen Flächenfilters durch ausdrückliche Bezugnahme zum Inhalt der vorliegenden Anmeldung genommen. Dessen Form kann so sein, dass sie sich insbesondere in Durchströmungsrichtung des Wassers, also entlang beider Durchströmungswege, zu ihrem Ende hin verjüngt. Dabei kann besonders vorteilhaft vorgesehen sein, dass die Stützstruktur und der Flächenfilter sozusagen rotationssymmetrisch ausgebildet sind, insbesondere was die Mantelflächen betrifft. Eine bevorzugte Form ist in der genannten Durchströmungsrichtung konisch zulaufend, um hier verjüngt ausgebildet zu sein, wie zuvor beschrieben worden ist. Durch eine rotationssymmetrische Ausbildung können relativ gleichmäßige Durchströmungs- und Druckverhältnisse innerhalb der Stützstruktur bzw. innerhalb des Flächenfilters bewirkt werden.

In weiterer möglicher Ausgestaltung der Erfindung können die Stützrippen in ihrem Längsverlauf einen mehreckigen Querschnitt aufweisen, insbesondere einen viereckigen Querschnitt. Eine in einen Innenraum der Stützstruktur hinein weisende Innenfläche dieses Querschnitts der Stützrippen kann parallel zu dem Flächenfilter sein und dabei entweder gerade oder entsprechend gerundet ausgebildet sein. Insbesondere ist auch eine nach außen weisende Außenfläche des Querschnitts parallel zu dem Flächenfilter und somit ebenfalls gerade oder gerundet ausgebildet wie zuvor genannt.

Des Weiteren ist es möglich, dass die genannte Innenfläche und die Außenfläche des Querschnitts der Stützstruktur bzw. einer Stützrippe jeweils durch Durchströmungsflächen verbunden sind. Diese Durchströmungsflächen können in Ebenen verlaufen, die parallel zueinander sind. Diese parallelen Ebenen wiederum sind rechtwinklig zu einer Mittellängsachse der Stützstruktur. Alternativ könnten die parallelen Ebenen auch rechtwinklig zur Innenfläche bzw. Außenfläche verlaufen.

In weiterer vorteilhafter Ausgestaltung der Erfindung ist das in Durchströmungsrichtung des zu filternden Wassers weisende Ende der Stützstruktur verschlossen und weist nur die vorgenannte zentrale Öffnung auf. Diese verschlossene Ausgestaltung ist durch die Stützstruktur selbst gebildet und nicht erst durch den Flächenfilter oder ein daran befestigtes Teil.

Bevorzugt wird zumindest ein Teil der Stützrippen durch umlaufende Rippenringe gebildet. Diese Rippenringe können vorteilhaft Ringebenen definieren, welche rechtwinklig zu einer vorgenannten Mittellängsachse der Stützstruktur verlaufen. Zusätzlich zu den Rippenringen kann mindestens eine Längsrippe vorgesehen sein, welche mehrere Rippenringe, bevorzugt alle Rippenringe, miteinander verbindet. Alle Rippenringe sind dabei mit mindestens einer Längsrippe verbunden. Besonders vorteilhaft ist mindestens eine Längsrippe, insbesondere sind mindestens zwei Längsrippen oder alle Längsrippen, dazu ausgebildet, um alle Rippenringe zu verbinden. So weist eine einfache Ausgestaltung der Stützstruktur mehrere Rippenringe auf, beispielsweise zwei bis sechs Rippenringe, und mehrere Längsrippen auf, beispielsweise zwei bis sechs Längsrippen. Die Stützrippen und die Längsrippen sind dabei einstückig und einteilig miteinander hergestellt auf vorgenannte Art und Weise.

Ein Abstand der Rippenringe zueinander, insbesondere entlang einer Mittellängsachse der Stützstruktur, ist vorteilhaft jeweils gleich. In ähnlicher Form kann auch ein Abstand der Längsrippen in Umfangsrichtung zueinander jeweils gleich sein. So ergeben sich in Umfangsrichtung gesehen möglichst gleiche Durchströmungsverhältnisse für ein möglichst effizientes und vollständiges Filtern.

In Ausgestaltung der Erfindung ist vorgesehen, dass in maximal 3 cm Entfernung in Durchströmungsrichtung des zu filternden Wassers hinter dem Filtereingang in das Filtergehäuse die Stützstruktur samt Flächenfilter kommt. Vorteilhaft kann sogar vorgesehen sein, dass der Filtereingang in das Filtergehäuse direkt in die Stützstruktur hineinführt. Dabei kann die Stützstruktur einerseits ein separat hergestelltes Teil sein, das im Filtergehäuse befestigt ist, vorteilhaft dauerhaft befestigt ist. Alternativ kann die Stützstruktur aus dem Filtergehäuse entnehmbar ausgebildet sein, beispielsweise um den Flächenfilter davon zu lösen. Bevorzugt sind Stützstruktur und Flächenfilter derart in dem Filtergehäuse angeordnet, dass sämtliches Wasser, das durch die Filtervorrichtung bzw. durch das Filtergehäuse entlang eines der beiden möglichen zuvor genannten Durchströmungswege strömt, auf alle Fälle durch die Stützstruktur hindurch verläuft bzw. strömt. Der Filterausgang führt dann aus dem Filtergehäuse heraus, wobei Wasser entweder entlang des ersten Durchströmungswegs und somit durch den Flächenfilter hindurchströmt. Entlang des zweiten Durchströmungswegs strömt es zwar durch die Stützstruktur, aber nicht durch den Flächenfilter hindurch und somit aus dem Filtergehäuse herausströmen kann. Eine Einstellung, ob das Wasser entlang des ersten Durchströmungswegs oder entlang des zweiten Durchströmungswegs strömt, kann durch mechanische Mittel wie Weichen, Ventile odgl. erfolgen. Vorteilhaft erfolgt dies alternativ durch geometrische Gestaltung der Filtervorrichtung und vor allem der Stützstruktur samt Flächenfilter derart, dass es von einem anliegenden Wasserdruck abhängt, ob und in welchem Maß das Wasser entlang des ersten Durchströmungswegs und/oder des zweiten Durchströmungswegs strömt.

Somit strömt nur ein Teil des Wassers, das durch die gesamte Filtervorrichtung bzw. durch das Filtergehäuse strömt, auch durch den Flächenfilter hindurch. Der andere Teil strömt sozusagen an dem Flächenfilter vorbei auch durch die Stützstruktur, aber durch die zentrale Öffnung am Ende hindurch und wird somit nicht gefiltert. Je nach Aufteilung des Verhältnisses zwischen diesen beiden Strömungen entlang der beiden Durchströmungswege kann ein Gesamtdurchsatz bzw. eine Gesamt-Durchströmung durch die Filtervorrichtung eingestellt werden. Dies weist den großen Vorteil auf, dass in einer alternativen Möglichkeit nur ein Teil des hindurchströmenden Wassers gefiltert wird, so dass die Gesamt-Durchströmung relativ groß ist. Wird dieselbe Wassermenge gleich gelassen, beispielsweise weil in das wasserführende Haushaltsgerät weder frisches Wasser hinzugegeben wird noch Abwasser herausgeführt wird, so erfolgt allmählich, beispielsweise bei mindestens fünf oder mindestens zehn Durchläufen durch die Filtervorrichtung, auch eine entsprechend gute Filterung. Gerade bei Waschvorgängen in einer Waschmaschine als wasserführendes Haushaltsgerät ist ja sowohl beim Waschen als auch beim Spülen ein solches mehrfaches Verwenden des Wassers als Zirkulation vorgesehen. Dabei kann in vorteilhafter Ausgestaltung der Erfindung vorgesehen sein, dass maximal 50 % des durch das Filtergehäuse insgesamt strömenden Wassers entlang dem ersten Durchströmungsweg durch den Flächenfilter hindurchströmen, vorteilhaft maximal 30 % oder sogar nur maximal 10 %.

Somit kann eine Wasserströmung entlang des zweiten Durchströmungswegs, da sie nicht durch die Filterfläche hindurchführt, auch als eine Art Bypass bzw. Bypass-Wasserführung angesehen werden. Sie dient eben hauptsächlich dazu, eine gesamte Durchströmung zu erreichen, die schließlich mit einer gewissen Durchströmungsmenge erfolgen muss für einen praxistauglichen Arbeitsvorgang in dem Haushaltsgerät. Aber auch bei dieser Durchströmung kann zumindest ein Teil des hindurchströmenden Wassers gefiltert werden.

In weiterer Ausgestaltung der Erfindung kann das Filtergehäuse so ausgebildet sein, dass es öffenbar ist oder eine Entnahmeöffnung aufweist, wobei hierfür ein Filtergehäuseverschluss vorgesehen ist. Dieser Filtergehäuseverschluss ist entfernbar ausgebildet bzw. kann derart von der Entnahmeöffnung wegbewegt werden, dass der Flächenfilter von der Stützstruktur entfernbar ist und somit aus dem Filtergehäuse entnehmbar ist. Damit kann er samt dem darin gesammelten Filtrat entsorgt werden, vorteilhaft auf dem Filtrat entsprechenden ausreichend sicheren bzw. gründlichen Weg. Auf entsprechende Art und Weise bzw. auf umgekehrtem Weg kann ein frischer und unverbrauchter Flächenfilter in das Filtergehäuse gebracht werden und auf die Stützstruktur gebracht werden bzw. aufgebracht werden. Er wird dann als frischer Filter zur Reinigung des ihn durchströmenden Wassers entlang des ersten Durchströmungswegs verwendet.

Um den Flächenfilter in dem Filtergehäuse bzw. an der Stützstruktur zu halten, ist erfindungsgemäß eine Halteeinrichtung vorgesehen. Diese Halteeinrichtung sollte zumindest teilweise an dem Flächenfilter anliegen, bevorzugt von vorne, insbesondere von außen. So kann vorteilhaft der Flächenfilter zwischen der Halteeinrichtung einerseits und der Stützstruktur andererseits gehalten werden. Insbesondere hält die Halteeinrichtung den Flächenfilter somit gegen den anliegenden Wasserdruck des durchströmenden Wassers. Dabei sollte die Halteeinrichtung zumindest in einem entgegen der Durchströmungsrichtung entlang des ersten Durchströmungswegs liegenden Endbereich des Flächenfilters vorgesehen sein, welches bei einem konisch verjüngt zulaufenden Flächenfilter der breitere bzw. aufgeweitete Teil ist. Diese Halteeinrichtung ist vorteilhaft derart bewegbar, dass sie von der Stützstruktur auch wieder entfernt werden kann, so dass der Flächenfilter frei ist bzw. die Halteeinrichtung nicht mehr am Flächenfilter anliegt und damit der Flächenfilter von der Stützstruktur entfernt werden kann. Um im befestigten Zustand eine sichere Halterung des Flächenfilters an der Stützstruktur zu gewährleisten, ist es möglich, dass die Halteeinrichtung in Umfangsrichtung des Flächenfilters gesehen an mindestens zwei Punkten an dem Flächenfilter anliegt. Vor allem kann sie vorteilhaft mit dem Flächenfilter dazwischen gegen die Stützstruktur gedrückt sein. Dazu kann die Halteeinrichtung mindestens einen umlaufenden Haltering aufweisen, der bevorzugt so ausgebildet und/oder angeordnet ist, dass er im befestigten Zustand der Halteeinrichtung der Anordnung von mindestens einer Stützrippe entspricht bzw. dieser Haltering von außen mit dem Flächenfilter dazwischen an der Stützrippe anliegt. So kann zum einen vermieden werden, dass der Flächenfilter zu stark gedehnt wird. Zum anderen wird so die nicht durchströmbare Fläche aufgrund des Anliegens der Stützstruktur innen am Flächenfilter reduziert, weil nicht nochmals zusätzliche Fläche durch die Halteeinrichtung bzw. den genannten Haltering verloren geht.

Die Halteeinrichtung kann vorteilhaft derart ausgebildet sein, dass sie im Wesentlichen die Außenfläche des Flächenfilters teilweise oder ganz überdeckt. Besonders vorteilhaft kann sie weitgehend wasserdurchlässig ausgebildet sein, nämlich eben als Rippenstruktur ähnlich wie die Stützstruktur. Alternativ dazu könnte sie eine als Sieb oder Netz ausgebildete Haltefläche aufweisen. Für eine sichere bzw. ausreichende mechanische Stabilität wird aber eine Rippenstruktur bzw. Gitterstruktur bevorzugt, insbesondere entsprechend der Stützstruktur an ihrer Außenseite.

Bei der Erfindung ist eine Halteführung für diese Halteeinrichtung vorgesehen, wobei die Halteeinrichtung entlang der Halteführung geführt bewegbar ist. Die Halteführung ist derart ausgebildet, dass die Halteeinrichtung in einer ersten Endstellung den Flächenfilter fest auf der Stützstruktur hält. Dazu befindet sich die Halteeinrichtung vorteilhaft an der oder über der Stützstruktur und ist an diese angedrückt, insbesondere mit entsprechender gleicher Struktur. In einer anderen zweiten Endstellung, wobei es vorteilhaft nur diese zwei Endstellungen gibt, kann die Halteeinrichtung den Flächenfilter freigeben zum vollständigen Lösen von der Stützstruktur. So kann der Flächenfilter von der Stützstruktur entfernt werden, um ihn dann aus dem Filtergehäuse zu entfernen bzw. zu entnehmen durch die vorgenannte Entnahmeöffnung. Ein Bewegungsweg der Halteführung kann dabei an dieser Entnahmeöffnung vorbeiführen, um den benutzten bzw. verbrauchten Flächenfilter zu entnehmen. Des Weiteren kann so ein frischer und unverbrauchter Flächenfilter eingesetzt werden, der dann entweder direkt auf die Stützstruktur aufgesetzt wird und dann mittels der Halteeinrichtung daran gehaltert wird. Alternativ kann der frische unverbrauchte Flächenfilter an der Halteeinrichtung angebracht oder fixiert werden und dann zusammen mit der Halteeinrichtung an die Stützstruktur herangeführt werden und daran gehaltert bzw. befestigt werden.

Während die Entnahme des verbrauchten Flächenfilters vorteilhaft durch die genannte Entnahmeöffnung erfolgt, kann das Einsetzen eines frischen unverbrauchten Flächenfilters entweder auch durch diese Entnahmeöffnung erfolgen, so dass keine weitere Öffnung in dem Filtergehäuse vorgesehen sein muss. Alternativ kann eine weitere Öffnung in dem Filtergehäuse vorgesehen sein. Dies ermöglicht es beispielsweise, dass der verbrauchte Flächenfilter aufgrund der Schwerkraft durch die nach unten weisende Entnahmeöffnung nach unten fällt. Weitere Aktoren außer der Halteeinrichtung, die bewegt werden kann, sind dafür nicht nötig. Der frische unverbrauchte Flächenfilter kann dann beispielsweise von oben durch eine entsprechende eigene Öffnung in das Filtergehäuse eingesetzt werden, und auch hier kann unter Umständen die Schwerkraft genutzt werden.

Zusätzlich oder alternativ zu einer vorgenannten Nutzung der Schwerkraft können die Halteeinrichtung und/oder die vorgenannte Halteführung einen Antrieb aufweisen, der vorteilhaft ein elektromagnetischer oder ein elektromotorischer Antrieb sein kann. Dieser Antrieb dient zur Bewegung der Halteeinrichtung im Filtergehäuse bzw. an oder entlang der vorgenannten Halteführung. Besonders vorteilhaft kann die Filtervorrichtung eine Entnahmevorrichtung aufweisen, um den Flächenfilter von bzw. aus der Halteeinrichtung zu entnehmen. Möglicherweise wäre natürlich auch ein manueller Antrieb umsetzbar. Des Weiteren sollte die Filtervorrichtung eine Entnahmevorrichtung aufweisen, um den Flächenfilter von oder aus der Halteeinrichtung zu entnehmen. Wenn diese den Flächenfilter nämlich vorher umgeben hat in der Position auf der Stützstruktur, so ist es denkbar, dass der Flächenfilter innen an der Halteeinrichtung haftet, beispielsweise auch weil er noch feucht ist aufgrund der Adhäsion. Um ihn dann sicher und einfach von der Halteeinrichtung zu entfernen, kann eine solche Entnahmevorrichtung verwendet werden. Diese kann in einfacher Ausgestaltung ein bewegbarer Stößel odgl. sein, der durch eine der Öffnungen in der Struktur der Halteeinrichtung stößt und dabei den Flächenfilter aus der Halteeinrichtung herausdrückt.

In weiterer vorteilhafter Ausgestaltung der Erfindung kann eine Vorratshalterung für einen Vorrat von Flächenfiltern an der Filtervorrichtung vorgesehen sein, in der mehrere, beispielsweise mehr als fünf oder mehr als zwanzig, unverbrauchte Flächenfilter Platz finden. Die Vorratshalterung kann eine Vorratsöffnung aufweisen, durch welche ein Flächenfilter aus der Vorratshalterung entnommen werden kann oder durch die er hindurch bewegt werden kann. Diese Vorratsöffnung sollte nahe oder direkt bei einer vorgenannten Entnahmeöffnung oder nahe oder direkt bei einer weiteren Öffnung im Filtergehäuse angeordnet sein, durch welche ein frischer unverbrauchter Flächenfilter eingebracht werden können soll. Für dieses Einbringen sind vorteilhaft Einbringmittel vorgesehen, mit denen ein frischer unverbrauchter Flächenfilter in das Filtergehäuse eingebracht werden kann und entweder direkt auf die Stützstruktur aufgebracht werden kann oder in die Halteeinrichtung eingesetzt oder an die Halteeinrichtung gebracht werden kann. Diese Halteeinrichtung bringt ihn dann wiederum auf die Stützstruktur auf und haltert bzw. befestigt ihn gleichzeitig daran. Für solche Einbringmittel kann vorteilhaft, ähnlich wie zuvor für die Halteeinrichtung bzw. für die Halteführung beschrieben, ein Antrieb vorgesehen sein. Dann ist eine Automatisierung möglich, und eine Bedienperson muss dies nicht von Hand durchführen.

Eine zuvor beschriebene Filtervorrichtung ist vorteilhaft in einem wasserführenden Haushaltsgerät angeordnet, welches einen Behandlungsraum für zu behandelnde Gegenstände aufweist, je nach konkreter Art des Haushaltsgeräts. Des Weiteren weist das Haushaltsgerät einen Behandlungsraum für zu behandelnde Gegenstände auf, vorteilhaft eine wasserdichte oder abschließbare Kammer. Zusätzlich sind Wasserleitungen, ggf. Ventile und dann eben die vorbeschriebene Filtervorrichtung darin enthalten. Die Pumpe weist bevorzugt einen Pumpenausgang auf, der mittels einer Wasserleitung mit dem Filtereingang verbunden ist.

In weiterer Ausgestaltung der Erfindung kann unter einer vorgenannten Entnahmeöffnung aus dem Filtergehäuse ein Sammelbehälter für gebrauchte Flächenfilter vorgesehen sein. Dieser Sammelbehälter kann durch eine verschließbare Geräteöffnung aus dem Haushaltsgerät entnommen werden, alternativ kann durch eine solche Geräteöffnung zumindest eine Entsorgung von verbrauchten Flächenfiltern aus dem Sammelbehälter heraus erfolgen.

In entsprechender Weiterbildung der Erfindung kann entweder an derselben Entnahmeöffnung oder an einer anderen, zuvor genannten Öffnung für neue unverbrauchte Flächenfilter eine vorgenannte Vorratshalterung vorgesehen sein. Auch diese sollte durch eine verschließbare Geräteöffnung zugänglich sein, um neue Flächenfilter nachzufüllen, wenn der enthaltene Vorrat an Flächenfiltern aufgebraucht ist.

Die genannten Geräteöffnungen sind vorteilhaft an einer zugänglichen Seite des Haushaltsgeräts vorgesehen, insbesondere an einer Vorderseite. So können eingebaute Waschmaschinen oder Geschirrspülmaschinen auch gut bedient werden.

Für eine Filterung von Wasser mittels der Filtervorrichtung ist vorgesehen, dass es einen Normal-Betrieb des Haushaltsgeräts gibt, bei dem Wasser mittels der Pumpe durch die Filtervorrichtung gepumpt wird, wobei, wie eingangs erläutert worden ist, dabei zumindest ein Teil des Wassers gefiltert wird. Um dieses Wasser oder zumindest einen Teil des Wassers zu filtern, der entlang des ersten Durchströmungswegs strömt, wird eine Durchströmung von Wasser durch die Filtervorrichtung bis zu einem ersten Grenzwert eingestellt. Dies kann durch entsprechende Ansteuerung der Pumpe leicht und praxistauglich erfolgen. Um nun den Flächenfilter auszutauschen, kann in einem Austausch-Betrieb Wasser mittels der Pumpe stärker oder mehr Wasser durch die Filtervorrichtung gepumpt werden. Dies erfolgt vorteilhaft mit einer Durchströmung von Wasser, die höher ist als der vorgenannte erste Grenzwert, vorzugsweise mindestens 50 % höher als der erste Grenzwert, beispielsweise mindestens 100 % höher. Dafür kann die Pumpe mit einer erhöhten Durchströmung arbeiten, und zwar für eine vorgegebene Pumpdauer. Dabei wird erreicht, dass Verunreinigungen im Wasser, insbesondere die eingangs genannten Mikrofasern, die sich vorher zwar innerhalb der Filtervorrichtung bzw. innerhalb des Flächenfilters und innerhalb der Stützstruktur befunden haben, aber aufgrund von Verwirbelungen noch nicht unbedingt direkt an dem Flächenfilter angelegt wurden, sehr schnell oder nahezu schlagartig gegen den Flächenfilter gedrückt werden. Dort bleiben sie dann haften. Wenn dann das Wasser aus dem Filtergehäuse teilweise, weitgehend oder vorteilhaft vollständig entfernt wird, kann das Filtergehäuse geöffnet werden und der Flächenfilter aus dem Filtergehäuse und aus der Filtervorrichtung entnommen werden. Dabei kann dann auch direkt danach ein neuer und unverbrauchter Flächenfilter eingesetzt werden. Aufgrund des vorgenannten Druckstoßes bzw. aufgrund der höheren Durchströmung werden die herausgefilterten Gegenstände so stark von innen gegen den Flächenfilter gedrückt, dass sie an diesem verbleiben, wenn der Flächenfilter entnommen bzw. entfernt wird.

Wenn die Filtervorrichtung als vorgenannter Sanderson-Filter ausgebildet ist, so kann vorgesehen sein, dass beim Durchströmen mit Wasser mit einer Durchströmung bis zum ersten Grenzwert Wasser sowohl entlang des ersten Durchströmungswegs als auch entlang des zweiten Durchströmungswegs strömt. Dabei werden aber innerhalb der Stützstruktur aufgrund deren Ausgestaltung Wasserwirbel erzeugt, die bewirken, dass zwar Wasser auch durch den Flächenfilter entlang dem ersten Durchströmungsweg strömen kann. Diese Durchströmung ist aber noch nicht so stark, dass die zurückgehaltenen Verunreinigungen, insbesondere vorgenannte Mikrofasern, fest an den Flächenfilter gedrückt werden. Sie zirkulieren bzw. wirbeln sozusagen innerhalb der Stützstruktur nahe an dem Flächenfilter herum, dadurch dass sie aber nicht an ihm anliegen, können sie ihn auch nicht zusetzen bzw. verstopfen. Somit lässt die Filterleistung nicht nach und vor allem kann eine Durchströmungsmenge weitgehend gleich bleiben.

Für ein Entfernen des Flächenfilters aus der Filtervorrichtung und aus dem Filtergehäuse und/oder für das Einsetzen eines neuen und unverbrauchten Flächenfilters kann entweder eine automatische Abfolge vorgesehen sein. Dazu kann die vorgenannte Halteeinrichtung verwendet werden, welche dann einen steuerbaren Antrieb aufweisen kann. In entsprechender Form kann auch ein Antrieb für die vorgenannten Einbringmittel vorgesehen sein.

Alternativ kann das Entfernen des Flächenfilters aus der Filtervorrichtung und aus dem Filtergehäuse und/oder das Einsetzen eines neuen und unverbrauchten Flächenfilters manuell erfolgen. Dann kann auf einige oder alle Antriebe verzichtet werden, was eine konstruktive Vereinfachung bedeutet. Andererseits müssen entsprechende Zugangsmöglichkeiten für eine Bedienperson geschaffen werden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombination bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine schematische Funktionsdarstellung einer Waschmaschine als erfindungsgemäßes Haushaltsgerät samt erfindungsgemäßer Filtervorrichtung darin,
- Fig. 2: eine schematische Darstellung einer erfindungsgemäßen Filtervorrichtung,
- Fig. 3: einen konischen Flächenfilter für die erfindungsgemäße Filtervorrichtung alleine,
- Fig. 4: eine Darstellung einer Stützstruktur in Schnittdarstellung mit rippenartigem Aufbau,
- Fig. 5: eine Schnittdarstellung einer Halteeinrichtung für den Flächenfilter aus Fig. 3 an der Stützstruktur aus Fig. 4,
- Fig. 6: eine Schnittdarstellung durch den Innenraum der Filtervorrichtung, wobei die Halteeinrichtung aus Fig. 5 an die Stützstruktur aus Fig. 4 herangefahren ist,
- Fig. 7: eine Innenansicht der Filtervorrichtung ähnlich Fig. 6, wobei die Halteeinrichtung von der Stützstruktur entfernt ist,
- Fig. 8: die Darstellung der Filtervorrichtung aus Fig. 7 mit von oben herangeführtem unverbrauchtem neuem Flächenfilter,
- Fig. 9: eine Darstellung ähnlich Fig. 6 mit von der Halteeinrichtung auf die Stützstruktur geschobenem Flächenfilter, wobei die zwei Durchströmungswege eingezeichnet sind mit dünnen Pfeilen und mit dicken Pfeilen,
- Fig. 10: eine Darstellung entsprechend Fig. 8, wobei durch Entfernen der Halteeinrichtung von der Stützstruktur der verbrauchte Flächenfilter frei liegt und nach unten durch eine Entnahmeöffnung entsorgt werden kann,
- Fig. 11: eine Darstellung aufbauend auf Fig. 10, bei der der verbrauchte Flächenfilter nach unten durch die Entnahmeöffnung entfernt worden ist und ein neuer unverbrauchter Flächenfilter von oben durch eine Vorratsöffnung zugeführt wird.

### Detaillierte Beschreibung der Ausführungsbeispiele

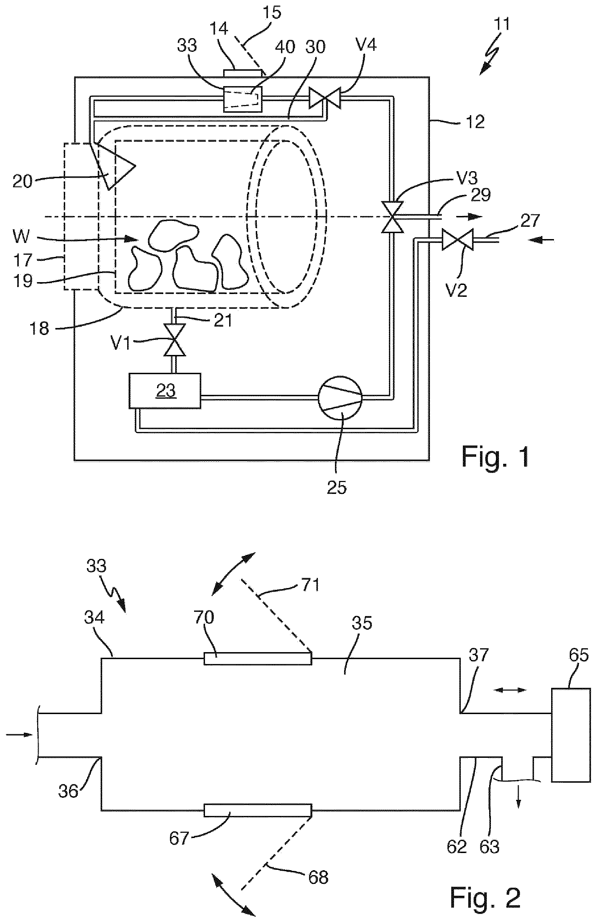

In der Fig. 1 ist eine erfindungsgemäße Waschmaschine 11 als zuvor beschriebenes wasserführendes Haushaltsgerät dargestellt. Alternativ könnte es auch ein Waschtrockner oder möglicherweise auch eine Geschirrspülmaschine odgl. sein. Die Waschmaschine 11 weist ein Gehäuse 12 auf mit einer an der Oberseite vorgesehenen Geräteöffnung 14 samt Klappe 15, um die Geräteöffnung 14 verschließen zu können. Diese Geräteöffnung 14 dient dazu, dass eine Bedienperson an eine darunter angeordnete erfindungsgemäße Filtervorrichtung 33 gelangen kann. Dies wird nachfolgend noch im Detail erläutert. Des Weiteren weist die Waschmaschine 11 zur linken Seite hin eine übliche Tür 17 und dahinter einen Trommelbehälter 18 auf, der eine Trommel 19 enthält. Um Wasser in die Trommel 19 sowie vor allem in darin befindliche Wäsche W zu bringen, ist im Bereich zur Tür 17 hin eine an sich bekannte Einspritzvorrichtung 20 vorgesehen. Diese Einspritzvorrichtung 20 zeigt, dass die Waschmaschine 11 als sogenannte Umflut-Waschmaschine ausgebildet ist.

Unten aus dem Trommelbehälter 18 führt ein Auslass 21 heraus, der mittels eines ersten Ventils V1 absperrbar ist. Hinter dem Ventil V1 ist ein Vorfilter 23 vorgesehen, der insbesondere zur Filterung von hindurchströmendem Wasser dient, um gröbere Verunreinigungen oder Partikel zu entfernen. Eine Wasserleitung führt von dem Vorfilter 23 zu einer Pumpe 25. Diese Pumpe 25 kann eine Heizeinrichtung aufweisen, wie dies an sich bekannt ist. Des Weiteren führt von unten und rechts oben eine Wasserleitung in den Vorfilter 23, die mittels eines weiteren Einlaufventils V2 an einen Einlauf 27 angeschlossen ist. Hier kann Frischwasser in die Waschmaschine 11 eingebracht werden, welches zuerst im Vorfilter 23 grob gefiltert wird, bevor es von der Pumpe 25 weitergepumpt wird. Eine Wasserleitung führt von der Pumpe 25 zu einem Auslaufventil V3, welches als Drei-Wege-Ventil ausgebildet ist. Eine Leitung geht nach rechts hin zu einem Auslauf 29 aus der Waschmaschine 11 heraus, insbesondere an einen Abwasseranschluss in einem Haushalt. Eine andere Leitung geht nach oben hin zu einem Bypass-Ventil V4. Ein möglicher Wasserweg des Bypass-Ventils V4 führt mittels einer Bypass-Leitung 30 relativ direkt zu der Einspritzvorrichtung 20. Ein anderer Wasserweg führt mittels einer Wasserleitung zu der vorgenannten Filtervorrichtung 33, und zwar hin zu deren Filtereingang. Ein Filterausgang der Filtervorrichtung 33 führt mittels einer weiteren Wasserleitung hin zu der Einspritzvorrichtung 20. Durch diese Bypass-Leitung 30 samt Bypass-Ventil V4 kann die Filtervorrichtung 33 sozusagen zugeschaltet werden oder weggeschaltet bzw. umgangen werden. Ob diese bzw. deren Filterfunktion notwendig ist, kann eine hier nicht dargestellte Steuerung der Waschmaschine 11 anhand verschiedener Informationen, insbesondere anhand Sensoren für beispielsweise Mikrofasern oder andere kleine Verunreinigungen, erkennen.

In der Fig. 2 ist in Vergrößerung die erfindungsgemäße Filtervorrichtung 33 dargestellt. Sie weist ein Filtergehäuse 34 mit einem Innenraum 35 auf. Von links kommt eine Leitung hin zu einem Filtereingang 36. Von rechts führt ein Filterausgang 37 aus der Filtervorrichtung 33 heraus, wobei dieser Filterausgang 37 vorteilhaft realisiert ist durch eine flexible Leitung, die hier als Rohrschieber 62 ausgebildet ist. Sie ist entsprechend des darüber dargestellten Pfeils nach links und nach rechts bewegbar, und zwar mittels eines Antriebs 65 am rechten Ende. Nach unten geht von dem Rohrschieber 62 eine Filterausgangsleitung 63 ab. Daraus kann in der Filtervorrichtung 33 gefiltertes Wasser austreten.

Unten an dem Filtergehäuse 34 ist eine Entnahmeöffnung 67 vorgesehen, die mittels einer Entnahmeklappe 68 wasserdicht verschlossen werden kann. An der Oberseite ist eine VorratsÖffnung 70 vorgesehen, die mittels einer Vorratsklappe 71 verschlossen werden kann. Diese werden nachfolgend noch näher erläutert. Darüber kann ein Vorratsbehälter mit Flächenfiltern darin angeordnet sein.

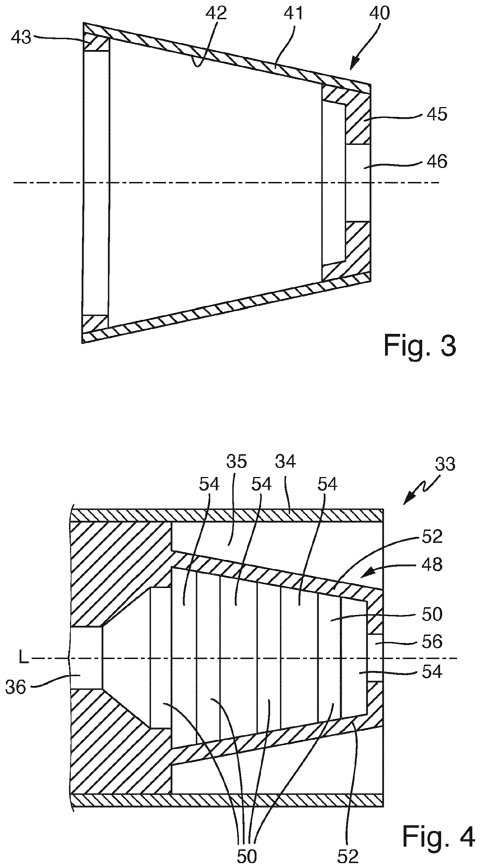

In der Fig. 3 ist ein kegelförmiger Flächenfilter 40 in Schnittdarstellung gezeigt. Er ist als eine Hülse ausgebildet und weist gleichmäßige konische Form auf. Im Wesentlichen wird er von Filtermaterial 41 gebildet, das vorteilhaft aus Filterpapier oder einem Filtervlies besteht und eine gewisse Festigkeit bzw. Zugfestigkeit aufweist, an sich aber eher nicht sehr fest bzw. biegeschlaff ausgebildet ist. Die Filtereigenschaften dieses Filtermaterials 41 sollten vorteilhaft an jeder Stelle in etwa gleich sein, so dass eine gleichmäßige Filterwirkung bei guter gleichmäßig verteilter Durchströmung möglich ist. Eine Innenseite 42 des Filtermaterials 41 weist aufgrund konstanter Dicke des Filtermaterials 41 ebenfalls konische Form auf.

Am linken aufgeweiteten Ende ist an der Innenseite 42 des Filtermaterials 41 ein umlaufender erster Verstärkungsring 43 vorgesehen. Er kann vorteilhaft aus Kunststoff bestehen und relativ dünn sein, beispielsweise 1 mm bis 5 mm Stärke aufweisen. Er kann mit dem Filtermaterial 41 verklebt sein oder daran angespritzt sein. Der erste Verstärkungsring 43 sorgt dafür, dass der Flächenfilter 40 formstabil ist, obwohl das Filtermaterial 41 selber relativ flexibel sein kann.

In ähnlicher Form ist am rechten Ende des Flächenfilters 40 mit dem kleineren Durchmesser ein zweiter Verstärkungsring 45 vorgesehen, insbesondere auf dieselbe Art und Weise befestigt. Der zweite Verstärkungsring 45 dient nicht nur dazu, das Filtermaterial 41 sozusagen in Form zu halten. Mindestens einer der hier dargestellten Verstärkungsringe 43 bzw. 45 kann auch an einer Außenseite des Flächenfilters vorgesehen sein, insbesondere dauerhaft befestigt oder festgeklebt. Dies muss aber nicht sein, so kann die Außenseite in der perfekten konischen Form bleiben.

Des Weiteren weist der zweite Verstärkungsring 45 eine Art Scheibe als Verschluss des Endes des Flächenfilters 40 auf, wobei in dieser Scheibe eine große zentrale Öffnung 46 vorgesehen ist. Eine Länge des Flächenfilters 40 kann beispielsweise 3 cm bis 10 cm betragen, der Durchmesser kann in einem ähnlichen, aber etwas geringeren Bereich liegen, und die zentrale Öffnung 46 kann einen Durchmesser zwischen 0,5 cm und 2 cm aufweisen.

In der Fig. 4 ist eine Stützstruktur 48 für den Flächenfilter 40 aus Fig. 3 dargestellt. Die Stützstruktur 48 ist, wie deutlich zu ersehen ist, sozusagen einstückig mit dem linken Bereich der Filtervorrichtung 33 bzw. deren Filtergehäuse 34 verbunden und hergestellt. Von links führt hier der Filtereingang 36 herein, der nach Aufweitung in das Innere der Stützstruktur 48 geht. Diese Stützstruktur 48 wird gebildet von vier Stützringrippen 50, die kreisförmig umlaufend sind und jeweils unterschiedlichen Durchmesser aufweisen sowie möglicherweise auch unterschiedlichen Abstand zueinander. An den Außenseiten sind die Stützringrippen 50 auch so abgeschrägt, dass sie perfekt die konische Mantelfläche bilden. Des Weiteren sind die hier dargestellten vier Stützringrippen 50 in strichpunktiert dargestellter Längsrichtung L der Filtervorrichtung 33 mittels mindestens zwei Stützlängsrippen 52 verbunden, insbesondere einstückig hergestellt bzw. gespritzt. Nach rechts zu ist die Stützstruktur 48 bis auf eine zentrale Öffnung 56 verschlossen.

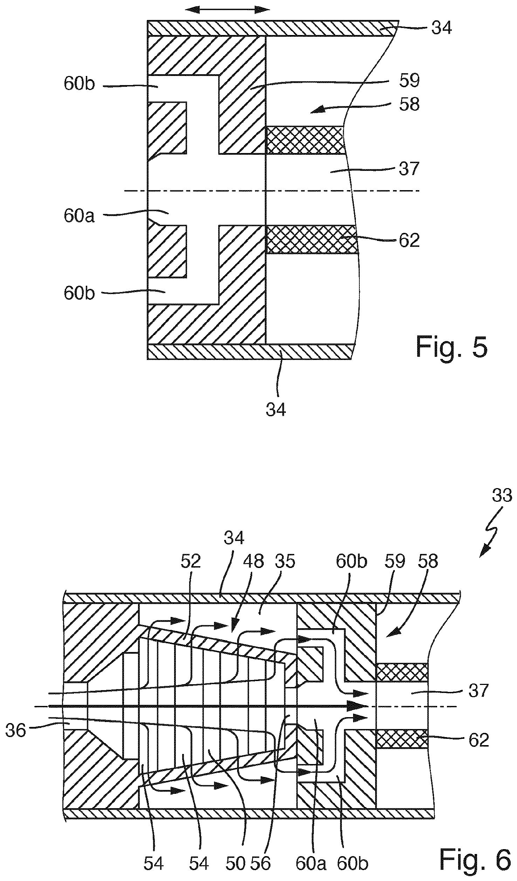

In der Fig. 5 ist eine Halteeinrichtung 58 dargestellt, um einen Flächenfilter 40 gemäß Fig. 3 auf der Stützstruktur 48 gemäß Fig. 4 zu halten. Die Halteeinrichtung 58 weist einen gemäß dem Pfeil nach links und rechts bewegbaren Halteschieber 59 auf, der an einer Innenseite des Filtergehäuses 34 anliegt. Diese Innenseite des Filtergehäuses 34 bildet die vorgenannte Halteführung für den Halteschieber 59 der Halteeinrichtung 58, da der Halteschieber 59 in dem Filtergehäuse genau geführt werden kann. Der Halteschieber 59 kann ein Kunststoffteil sein mit Kanälen darin. Ein zentraler Kanal 60a weist eine nach links offene Öffnung auf und geht nach rechts über in eine Rohrleitung, die hier als der Rohrschieber 62 ausgebildet ist. Dieser zentrale Kanal 60a wird von rechts an die Stützstruktur 48 aus Fig. 4 derart angelegt, dass die zentrale Öffnung 56 direkt an den Kanal 60a geht.

Radial außen und möglichst verteilt sind mehrere Kanäle 60b vorgesehen, die außerhalb des rechten Endes der Stützstruktur 48 sind. Sie führen nach innen in denselben Wasserweg wie von dem Kanal 60a kommend, nämlich in den Rohrschieber 62.

In der Fig. 6 ist dieser zuvor genannte Zustand dargestellt, wenn, hier noch ohne Flächenfilter 40, der Halteschieber 59 der Halteeinrichtung 58 am rechten schmaleren Ende der Stützstruktur 48 anliegt. Ein zuvor beschriebener erster Durchströmungsweg ist in dünnen Pfeilen dargestellt, er geht vom Filtereingang 36 durch die Durchströmungsöffnungen 54 der Stützstruktur 48 in den Innenraum 35. Von dort geht er weiter durch die Kanäle 60b hin zu dem Rohrschieber 62 und somit aus dem Filtergehäuse 34 heraus.

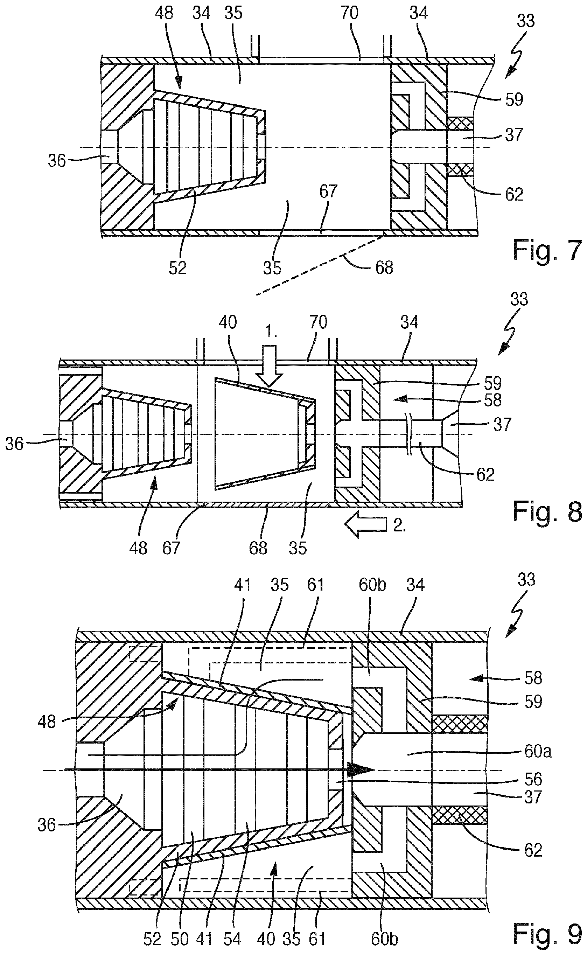

Ein zweiter Durchströmungsweg ist mit dickem Pfeil dargestellt durch den Filtereingang 36 in die Filtervorrichtung 33 hinein. Der zweite Durchströmungsweg verläuft im Wesentlichen entlang der strichpunktierten Mittellängsachse durch die zentrale Öffnung 56 der Stützstruktur 48 und den Kanal 60a des Halteschiebers 59. So führt er ebenfalls in den Rohrschieber 62 hinein und somit aus dem Filtergehäuse 34 heraus. Wie zuvor erläutert worden ist, sollte entlang des zweiten Durchströmungswegs insgesamt erheblich mehr Wasser verlaufen als entlang des ersten Strömungswegs, und zwar wenn ein Flächenfilter 40 auf die Stützstruktur 48 aufgebracht ist, siehe nachfolgend die Fig. 9 samt Beschreibung. Eine Aufteilung kann beispielsweise so sein, dass 10 % bis 30 % des insgesamt durch die Filtervorrichtung 33 strömenden Wassers entlang des ersten Durchströmungswegs läuft und der Rest entlang des zweiten Durchströmungswegs läuft.

In der Fig. 7 ist die Filtervorrichtung aus Fig. 6 dargestellt, wobei der Halteschieber 59 der Halteeinrichtung 58 nach rechts weggefahren ist von der Stützstruktur 48, beispielsweise 5 cm bis 12 cm weit. Hierfür ist der Antrieb 65 gemäß Fig. 2 vorgesehen, beispielsweise ein Linearantrieb oder ein Zahnstangenantrieb.

Aus Fig. 7 ist auch noch zu ersehen, dass unterhalb des Bereichs zwischen Stützstruktur 48 und Halteschieber 59 eine nach unten weisende Entnahmeöffnung 67 vorgesehen ist. Diese Entnahmeöffnung 67 kann so groß sein, dass ein kompletter Flächenfilter 40 ohne Notwendigkeit zur Deformation hindurchpasst und nach unten aus dem Filtergehäuse 34 entnommen werden kann oder herausfallen kann. Die Entnahmeöffnung 67 ist mittels einer gestrichelt dargestellten Entnahmeklappe 68 verschließbar, insbesondere wasserdicht verschließbar.

Oberhalb dieses Bereichs bzw. auch oberhalb der Entnahmeöffnung 67 ist eine ähnlich große und ähnlich ausgebildete Vorratsöffnung 70 vorgesehen. Auch sie kann mit einer in Fig. 2 dargestellten Vorratsklappe 71 verschlossen werden. Nach oben kann an der Vorratsöffnung 70 ein Vorratsbehälter für eine Vielzahl von neuen und unverbrauchten Flächenfiltern 40 angeordnet sein. In ähnlicher Form kann unterhalb der Entnahmeöffnung 67 ein Sammelbehälter für verbrauchte bzw. benutzte Flächenfilter angeordnet sein. Ein solcher Sammelbehälter kann beispielsweise mittels der Geräteöffnung 14 entsprechend Fig. 1 entnommen oder geleert werden. Alternativ kann durch diese Geräteöffnung 14 eine Bedienperson Flächenfilter 40 von Hand durch die Vorratsöffnung 70 in die Filtervorrichtung 33 einbringen und auch wieder herausholen. Dann könnte auf die Entnahmeöffnung 67 nach unten verzichtet werden.

In der Fig. 8 ist im Vergleich zur Fig. 7 dargestellt, dass von oben durch die Vorratsöffnung 70 ein neuer unverbrauchter Flächenfilter 40 herangeführt wird. Dies kann eben manuell oder mittels einer automatischen Zuführung erfolgen, die hier nicht dargestellt ist, aber leicht zu realisieren ist. Da die Entnahmeöffnung 67 mit der Entnahmeklappe 68 geschlossen ist, kann der Flächenfilter 40 nicht weiter nach unten fallen. Dann wird von rechts der Halteschieber 59 der Halteeinrichtung 58 heranbewegt als zweiter Schritt, wie durch den Pfeil veranschaulicht ist. Er schiebt den unverbrauchten Flächenfilter 40 auf die Stützstruktur 48 auf und hält ihn daran fest. Dabei ist, wie dies die Fig. 9 zeigt, der Halteschieber 59 im Anschlag mit der Stützstruktur 48, entweder direkt oder mit dazwischenliegendem zweiten Verstärkungsring 45 des Flächenfilters 40. Der Flächenfilter 40 sitzt bündig und anliegend auf der Stützstruktur 48 und wird von dieser in Form gehalten sowie in Position gehalten. Anstelle einer Halteeinrichtung, die den Flächenfilter nur von rechts auf die Stützstruktur 48 drückt, kann auch vorgesehen sein, dass sie eine ähnliche Gitterstruktur oder Rippenstruktur aufweist wie die Stützstruktur 48 selber, nur eben auf die Außenseite des Flächenfilters 40 passend. Dann kann der Flächenfilter 40 sozusagen überall dort außen auf die Stützstruktur 48 gedrückt werden, wo diese Stützringrippen 50 und Stützlängsrippen 52 aufweist. Dies ist oben und unten jeweils als langer Arm 61 gestrichelt angedeutet. An diesen Armen 61 könnten auch noch eingangs beschriebene Ringe vorgesehen bzw. an geformt sein, deren Position genau den Stützringrippen 50 entspricht. Somit liegen sie dann genau mit dem Filtermaterial 41 dazwischen außen an den Stützringrippen 50 an.

In der Position der Fig. 9 kann nun Wasser von links zum Filtereingang 36 hereinströmen und entlang der beiden Durchströmungswege gemäß Fig. 6 hindurchlaufen, wie zum Teil angedeutet ist. Wird dieses Wasser mittels der Pumpe 25 entsprechend einer eingangs beschriebenen ersten Durchströmung hindurchgepumpt, die noch nicht sehr stark ist, beispielsweise weniger als 1 l/min, so strömt ein Teil des Wassers entlang des zweiten Durchströmungswegs direkt durch die zentrale Öffnung 46 des Flächenfilters 40 und durch die zentrale Öffnung 56 der Stützstruktur 48 wieder heraus und durch den Kanal 60a des Halteschiebers 59 hin zum Rohrschieber 62 und somit zur Filterausgangsleitung. Ein Teil des Wassers strömt jedoch entlang des ersten Durchströmungswegs nach Fig. 6 durch die Stützstruktur 48 bzw. die Stützringrippen 50 und die Stützlängsrippen 52 hindurch und durch das Filtermaterial 41 des Flächenfilters 40. Dabei wird es gefiltert bzw. Verunreinigungen werden zurückgehalten und kann dann aus dem Innenraum 35 durch die Kanäle 60b hin zum Rohrschieber 62 und zur Filterausgangsleitung strömen. Dabei bilden sich innerhalb der Stützstruktur 48 bzw. zwischen den Stützringrippen 50 und Stützlängsrippen 52 Wirbel, in denen vom Filtermaterial 41 zurückgehaltene Verunreinigungen gehalten werden. Somit liegen diese Verunreinigungen nicht an der Innenseite 42 des Flächenfilters 40 an und können diese auch nicht verstopfen. Gleichzeitig werden sie aber nicht entlang des zweiten Durchströmungswegs mitgerissen, um sozusagen wieder im austretenden Wasser enthalten zu sein.

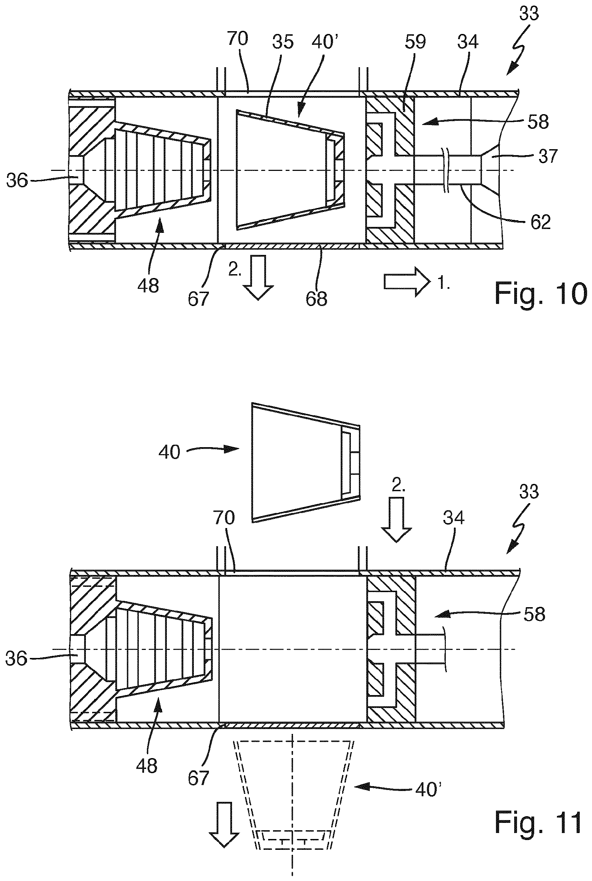

Eine Durchströmungsstärke für diese erste Durchströmung ist leicht experimentell zu ermitteln. Soll nun, beispielsweise nach Abschluss eines Waschvorgangs für die Wäsche W, ein Entfernen dieser Verunreinigungen, welche vorteilhaft Mikrofasern sind, erfolgen, so kann die Pumpe 25 eine deutlich stärkere Durchströmung einstellen, beispielsweise zweimal so hoch oder dreimal so hoch. Dann ändern sich die Durchströmungsverhältnisse in der Filtervorrichtung 33, und mehr Wasser versucht entlang des ersten Durchströmungswegs durch den Flächenfilter 40 hindurchzuströmen. Entsprechend dem vorgenannten Beispiel kann diese höhere zweite Durchströmung bei 2 l/min bis 3 l/min liegen. Dann werden die zurückgehaltenen Verunreinigungen, insbesondere Mikrofasern, nicht mehr in Wirbeln gehalten, sondern gegen die Innenseite 42 des Flächenfilters 40 gepresst und somit sozusagen daran fixiert. Dies kann für eine vorbestimmte Zeit erfolgen, beispielsweise 20 sec bis 60 sec. Nach Ablauf dieser Zeit stoppt die Pumpe 25 ihren Betrieb, und die Filtervorrichtung 33 kann entleert werden bzw. Wasser kann ablaufen. Ist dies erfolgt, bewegt in einem ersten Schritt der Antrieb 65 den Halteschieber 59 nach rechts, wie dies in Fig. 10 dargestellt ist. Ist dieser ganz nach rechts gefahren, wird die Entnahmeöffnung 67 durch Öffnen der Entnahmeklappe 68 freigegeben, und der benutzte bzw. verbrauchte Flächenfilter 40' kann nach unten entnommen oder entsorgt werden, beispielsweise auch selbsttätig nach unten fallen. Er befindet sich dann, wie in Fig. 11 gestrichelt dargestellt ist, außerhalb der Filtervorrichtung 33.

Wie in der Fig. 11 ebenso dargestellt ist, kann von oben ein frischer und unverbrauchter Filter 40 durch die Vorratsöffnung 70 eingeführt werden, so dass der Zustand wie in der Fig. 8 erreicht ist. Es ist leicht vorstellbar, wie dieser Austausch des Flächenfilters 40 auch manuell erfolgen kann. Dabei kann auch der Antrieb 65 durch einen manuellen Hebel odgl. ersetzt werden.

Ein Zuschalten der Filtervorrichtung 33 mittels des Bypass-Ventils V4 samt Bypass-Leitung 30 kann entweder erfolgen, wenn eine Bedienperson bei einer Programmwahl in die Waschmaschine 11 eingibt, dass Wäsche mit einem gewissen oder hohen Mikrofaseranteil zu waschen ist. Alternativ kann auch eine Sensorik vorgesehen sein, die das Überschreiten von bestimmten zuvor definierten Grenzwerten für Mikrofasern im zirkulierenden Wasser erkennt.

Die Stützstruktur 48 samt aufgebrachtem Flächenfilter 40 ist als sogenannter Sanderson-Filter ausgebildet. Dessen genaue Funktion ist aus dem Stand der Technik bekannt. Seine Funktionsweise ist Vorgängen in der Natur nachempfunden, insbesondere der Aspekt, dass bei der Durchströmung von Wasser unterhalb eines Grenzwerts herausgefilterte Verunreinigungen nicht an der Innenseite der Filterfläche anliegen, sondern sozusagen in Wirbeln zwischen den Rippen verbleiben. Ein Grenzwert für diese Durchströmung durch die Filtervorrichtung 33 kann zwischen 0,1 l/min und 1 l/min bis 2l/min liegen.

Das Heranführen und Haltern eines neuen unverbrauchten Flächenfilters 40 an der Stützstruktur 48 sowie auch das Entsorgen eines benutzten und verbrauchten Flächenfilters kann einem Prinzip entsprechen, wie es von automatischen Kaffeemaschinen bekannt ist, insbesondere solchen, wie sie von der Firma Nespresso angeboten werden. Insbesondere kann die Handhabung der Flächenfilter 40 ähnlich sein wie bei den dort mit Kaffeepulver gefüllten Aluminiumkapseln.

## Patentansprüche

1. Filtervorrichtung (33) für ein wasserführendes Haushaltsgerät (11), wobei die Filtervorrichtung (33) aufweist:
- einen Flächenfilter (40) mit Hülsenform und
- eine Stützstruktur (48) für den Flächenfilter (40),
- ein durchströmtes Filtergehäuse (34) mit Filtereingang (36) und Filterausgang (37),
- eine Halteeinrichtung (58), die den Flächenfilter (40) an der Stützstruktur (48) hält und die mindestens teilweise an dem Flächenfilter (40) anliegt,
wobei:
oder Flächenfilter (40) an der Stützstruktur (48) gehalten ist und von dieser in einer an die Außenform der Stützstruktur (48) angepassten Flächenfilterform stabil gehalten ist,
o die Stützstruktur (48) Durchströmungsöffnungen (54) hin zum Flächenfilter (40) und eine zentrale Öffnung (56) am Ende aufweist,
o ein erster Durchströmungsweg für Wasser, der in die Stützstruktur (48) hinein führt, durch die Durchströmungsöffnungen (54) aus der Stützstruktur (48) herausführt,
o ein zweiter Durchströmungsweg für Wasser, der in die Stützstruktur (48) hinein führt, durch die zentrale Öffnung (56) am Ende der Stützstruktur (48) aus der Stützstruktur (48) herausführt,
o die Stützstruktur (48) umlaufend ausgebildet ist und von Stützrippen (50) gebildet ist,
o die Stützrippen (50) zwischen sich die Durchströmungsöffnungen (54) ausbilden bzw. aufweisen,
oder Flächenfilter (40) außen an der Stützstruktur (48) befestigt ist derart, dass er die Durchströmungsöffnungen (54) überdeckt und außen an den Stützrippen (50) anliegt,
**dadurch gekennzeichnet, dass**:
eine Halteführung für die Halteeinrichtung (58) vorgesehen ist, entlang derer sie geführt bewegbar ist, wobei die Halteführung derart ausgebildet ist, dass die Halteeinrichtung (58)
- in einer ersten Endstellung den Flächenfilter (40) fest auf der Stützstruktur (48) hält, und
- in einer anderen zweiten Endstellung den Flächenfilter (40) freigibt zum vollständigen Lösen des Flächenfilters (40) von der Stützstruktur (48) zur Entnahme eines benutzten Flächenfilters (40') und zum Einsetzen eines frischen unbenutzten Flächenfilters (40).

2. Filtervorrichtung nach Anspruch 1, **dadurch gekennzeichnet, dass** ein in Durchströmungsrichtung des zu filternden Wassers weisendes Ende der Stützstruktur (48) bis auf die zentrale Öffnung (56) verschlossen ist, insbesondere auch ohne daran angebrachten Flächenfilter (40).

3. Filtervorrichtung nach Anspruch 1 oder 2, **dadurch gekennzeichnet, dass** der Flächenfilter (40) ein Filtermaterial aufweist, das ausgewählt ist aus der folgenden Gruppe: Papier bzw. Filterpapier, Gewebe, Gelege, Gewirke, insbesondere bestehend aus Kunstfaser.

4. Filtervorrichtung nach einem der vorhergehenden Ansprüche, **dadurch gekennzeichnet, dass** in Durchströmungsrichtung des zu filternden Wassers hinter dem Filtereingang (36) in das Filtergehäuse (34) die Stützstruktur (48) samt Flächenfilter (40) kommt, wobei die Stützstruktur (48) samt Flächenfilter (40) derart in dem Filtergehäuse (34) angeordnet ist, dass sämtliches Wasser, das durch die Filtervorrichtung (33) bzw. durch das Filtergehäuse (34) strömt, durch die Stützstruktur (48) hindurch strömt, wobei der Filterausgang (37) aus dem Filtergehäuse (34) herausführt, wobei vorzugsweise in Durchströmungsrichtung des zu filternden Wassers hinter dem Filtereingang (36) in das Filtergehäuse (34) die Stützstruktur (48) samt Flächenfilter (40) kommt, wobei die Stützstruktur (48) samt Flächenfilter (40) derart in dem Filtergehäuse (34) angeordnet ist, dass nur ein Teil des Wassers, das durch die Filtervorrichtung (33) bzw. durch das Filtergehäuse (34) strömt, entlang des ersten Durchströmungswegs durch den Flächenfilter (40) hindurch strömt, wobei der Filterausgang (37) aus dem Filtergehäuse (34) herausführt, wobei der restliche verbleibende Teil des Wassers entlang des zweiten Durchströmungswegs an dem Flächenfilter (40) vorbei durch das Filtergehäuse (34) strömt, wobei insbesondere maximal 50% des durch das Filtergehäuse (34) strömenden Wassers durch den Flächenfilter (40) hindurchströmen.

5. Filtervorrichtung nach einem der vorhergehenden Ansprüche, **dadurch gekennzeichnet, dass** das Filtergehäuse (34) öffenbar ist oder eine Entnahmeöffnung (67) aufweist und einen Filtergehäuseverschluss (68) daran aufweist, wobei der Filtergehäuseverschluss (68) entfernbar oder derart von der Entnahmeöffnung (67) wegbewegbar ausgebildet ist, dass der Flächenfilter (40) von der Stützstruktur (48) entfernbar ist und aus dem Filtergehäuse (34) entnehmbar ist zur Entsorgung, wobei vorzugsweise auf umgekehrtem Weg ein frischer unbenutzter Flächenfilter (40) auf die Stützstruktur (48) bringbar ist.

6. Filtervorrichtung nach einem der vorhergehenden Ansprüche, **dadurch gekennzeichnet, dass** der Flächenfilter (40) zwischen Halteeinrichtung (58) und Stützstruktur (48) gehalten ist, wobei insbesondere die Halteeinrichtung (58) in einem entgegen der Durchströmungsrichtung entlang des ersten Durchströmungswegs liegenden Endbereich des Flächenfilters (40) vorgesehen ist, wobei die Halteeinrichtung (58) entfernbar ist von der Stützstruktur (48) derart, dass der Flächenfilter (40) frei ist bzw. die Halteeinrichtung (58) nicht mehr am Flächenfilter (40) anliegt, wobei vorzugsweise die Halteeinrichtung (58) in Umfangsrichtung des Flächenfilters (40) an mindestens zwei Punkten an dem Flächenfilter (40) anliegt, insbesondere mit dem Flächenfilter (40) dazwischen gegen die Stützstruktur (48) gedrückt ist, wobei vorzugsweise die Halteeinrichtung (58) mindestens einen umlaufenden Haltering aufweist, wobei eine Anordnung des mindestens einen Halterings der Anordnung von mindestens einer Stützrippe (50) entspricht bzw. der Haltering an der Stützrippe (50) anliegt.

7. Filtervorrichtung nach Anspruch 6, **dadurch gekennzeichnet, dass** die Halteeinrichtung (58) im Wesentlichen die Außenfläche des Flächenfilters (40) überdeckt und weitgehend wasserdurchlässig ausgebildet ist, wobei insbesondere die Halteeinrichtung (58) mit einer als Sieb oder Netz ausgebildeten Haltefläche oder mit einer Rippenstruktur bzw. Gitterstruktur, die der Außenseite der Stützstruktur (48) entspricht, außen an dem Flächenfilter (40) anliegt.

8. Filtervorrichtung nach einem der vorhergehenden Ansprüche, **dadurch gekennzeichnet, dass** ein Bewegungsweg der Halteführung an der Entnahmeöffnung (67) nach Anspruch 5 vorbeiführt.

9. Filtervorrichtung nach einem der Ansprüche 6 bis 8, **dadurch gekennzeichnet, dass** die Halteeinrichtung (58) und/oder die Halteführung einen Antrieb aufweisen zur Bewegung der Halteeinrichtung (58) an oder entlang der Halteführung, wobei vorzugsweise die Filtervorrichtung (33) eine Entnahmevorrichtung aufweist zur Entnahme eines Flächenfilters (40) von oder aus der Halteeinrichtung (58), wobei insbesondere ein Vorrat von Flächenfiltern (40) in einer Vorratshalterung vorgesehen ist, und die Vorratshalterung eine Vorratsöffnung für einen Flächenfilter (40) aus der Vorratshalterung aufweist, die nahe oder direkt bei einer Entnahmeöffnung (67) nach Anspruch 5 oder 8 am Filtergehäuse (34) angeordnet ist, wobei vorzugsweise Einbringmittel vorgesehen sind, um einen Flächenfilter (40) in das Filtergehäuse (34) einzubringen und auf die Stützstruktur (48) aufzubringen oder in die Halteeinrichtung (58) einzusetzen.

10. Wasserführendes Haushaltsgerät (11) mit einer Filtervorrichtung (33) nach einem der vorhergehenden Ansprüche, **dadurch gekennzeichnet, dass** das Haushaltsgerät (11) einen Behandlungsraum (19) für zu behandelnde Gegenstände (W), eine Pumpe (25), Wasserleitungen und die Filtervorrichtung (33) aufweist, wobei vorzugsweise ein Pumpenausgang aus der Pumpe mittels einer Wasserleitung mit dem Filtereingang (36) verbunden ist.

11. Wasserführendes Haushaltsgerät (11) nach Anspruch 10, **dadurch gekennzeichnet, dass** unter einer Entnahmeöffnung (67) aus dem Filtergehäuse (34) nach Anspruch 5 oder 8 ein Sammelbehälter für gebrauchte Flächenfilter (40') vorgesehen ist, wobei vorzugsweise der Sammelbehälter durch eine verschließbare Geräteöffnung aus dem Haushaltsgerät (11) entnehmbar ist.

12. Wasserführendes Haushaltsgerät (11) nach Anspruch 10 oder 11, **dadurch gekennzeichnet, dass** die Geräteöffnung an einer zugänglichen Seite des Haushaltsgeräts (11), insbesondere an einer Vorderseite, angeordnet ist.

13. Verfahren zum Filtern von Wasser in einer Filtervorrichtung (33) eines wasserführenden Haushaltsgeräts (11) nach einem der Ansprüche 10 bis 12, **gekennzeichnet durch** die Schritte:
- in einem Normal-Betrieb des Haushaltsgeräts (11) wird Wasser mittels der Pumpe (25) durch die Filtervorrichtung (33) gepumpt zum Filtern,
- zum Filtern des Wassers wird eine Durchströmung von Wasser durch die Filtervorrichtung (33) bis zu einem ersten Grenzwert eingestellt,
- in einem Austausch-Betrieb zum Austauschen des Flächenfilters (40) der Filtervorrichtung (33) wird Wasser mittels der Pumpe (25) durch die Filtervorrichtung (33) gepumpt mit einer Durchströmung, die höher als der erste Grenzwert ist, vorzugsweise mindestens 50% höher als der erste Grenzwert ist,
- die Pumpe (25) arbeitet für eine vorgegebene Pumpdauer mit der erhöhten Durchströmung,
- dann wird der Betrieb der Pumpe (25) ganz eingestellt,
- wobei vorzugsweise Wasser aus dem Filtergehäuse (34) teilweise, weitgehend oder vollständig entfernt wird,
- anschließend wird der Flächenfilter (40') aus der Filtervorrichtung (33) und dem Filtergehäuse (34) entfernt und ein neuer und unbenutzte Flächenfilter (40) wird eingesetzt.

14. Verfahren nach Anspruch 13, **dadurch gekennzeichnet, dass** das Entfernen des Flächenfilters (40') aus der Filtervorrichtung (33) und aus dem Filtergehäuse (34) und/oder das Einsetzen des neuen und unbenutzten Flächenfilters (40) automatisch erfolgt, vorzugsweise mittels der Halteeinrichtung (58) nach einem der Ansprüche 6 bis 9, die dazu einen steuerbaren Antrieb aufweist.

15. Verfahren nach Anspruch 14, **dadurch gekennzeichnet, dass** das Entfernen des Flächenfilters (40') aus der Filtervorrichtung (33) und aus dem Filtergehäuse (34) und/oder das Einsetzen des neuen und unbenutzten Flächenfilters (40) manuell erfolgt, wobei vorzugsweise die Halteeinrichtung (58) nach einem der Ansprüche 6 bis 9 manuell von einer Bedienperson betätigt wird.

## Claims

1. Filter device (33) for a water-carrying domestic appliance (11), wherein the filter device (33) comprises
- a panel filter (40) with a sleeve shape and
- a support structure (48) for the panel filter (40),
- a filter housing (34) through which a flow passes, with filter inlet (36) and filter outlet (37),
- a holding device (58) which holds the panel filter (40) on the support structure (48) and which rests at least partially against the panel filter (40),
wherein:
o the panel filter (40) is held on the support structure (48) and is held stably by the latter in a panel filter shape adapted to the outer shape of the support structure (48),
o the support structure (48) has through-flow openings (54) towards the panel filter (40) and a central opening (56) at the end,
o a first through-flow path for water, which leads into the support structure (48), leads out of the support structure (48) through the through-flow openings (54),
o a second flow path for water, which leads into the support structure (48), leads out of the support structure (48) through the central opening (56) at the end of the support structure (48),
o the support structure (48) is of circumferential design and is formed by support ribs (50),
o the supporting ribs (50) form or have the through-flow openings (54) between them,
o the panel filter (40) is attached to the outside of the support structure (48) in such a way that it covers the through-flow openings (54) and rests on the outside of the supporting ribs (50),
**characterised in that**
a holding guide is provided for the holding device (58), along which it can be moved in a guided manner, the holding guide being designed in such a way that the holding device (58)
- in a first end position holds the panel filter (40) firmly on the support structure (48), and
- in another second end position, releases the panel filter (40) for complete detachment of the panel filter (40) from the support structure (48) for removal of a used panel filter (40') and for insertion of a fresh, unused panel filter (40).

2. Filter device according to claim 1, **characterised in that** one end of the support structure (48) pointing in the direction of flow of the water to be filtered is closed up to the central opening (56), in particular also without a panel filter (40) attached thereto.

3. Filter device according to claim 1 or 2, **characterised in that** the panel filter (40) has a filter material which is selected from the following group: paper or filter paper, fabric, scrim, knitted fabric, in particular consisting of synthetic fibre.

4. Filter device according to one of the preceding claims, **characterised in that** the support structure (48) together with the panel filter (40) comes behind the filter inlet (36) into the filter housing (34) in the direction of flow of the water to be filtered, wherein the support structure (48) together with the panel filter (40) is arranged in the filter housing (34) in such a way that all water which flows through the filter device (33) or through the filter housing (34) is filtered through the filter housing (34). through the filter housing (34) flows through the support structure (48), wherein the filter outlet (37) leads out of the filter housing (34), wherein the support structure (48) together with the panel filter (40) preferably comes behind the filter inlet (36) into the filter housing (34) in the direction of flow of the water to be filtered, wherein the support structure (48) together with the panel filter (40) is arranged in the filter housing (34) in such a way that only a part of the water which flows through the filter device (33) or through the filter housing (34) flows through the panel filter (40) along the first flow path, wherein the filter outlet (37) leads out of the filter housing (34), wherein the remaining part of the water flows through the filter housing (34) along the second flow path past the panel filter (40), wherein in particular a maximum of 50% of the water flowing through the filter housing (34) flows through the panel filter (40).

5. Filter device according to one of the preceding claims, **characterised in that** the filter housing (34) is openable or has a removal opening (67) and has a filter housing closure (68) thereon, wherein the filter housing closure (68) is designed to be removable or movable away from the removal opening (67), that the panel filter (40) can be removed from the support structure (48) and removed from the filter housing (34) for disposal, wherein preferably a fresh unused panel filter (40) can be brought onto the support structure (48) in the reverse direction.

6. Filter device according to one of the preceding claims, **characterised in that** the panel filter (40) is held between holding device (58) and support structure (48), wherein in particular the holding device (58) is provided in an end region of the panel filter (40) lying opposite the flow direction along the first flow path, wherein the holding device (58) can be removed from the support structure (48) in such a way that the panel filter (40) is free or the holding device (58) is no longer in contact with the panel filter (40), the holding device (58) preferably being in contact with the panel filter (40) at at least two points in the circumferential direction of the panel filter (40), in particular with the panel filter (40) pressed against the support structure (48) therebetween, wherein preferably the holding device (58) has at least one surrounding holding ring, wherein an arrangement of the at least one holding ring corresponds to the arrangement of at least one support rib (50), or the holding ring rests against the supporting rib (50).

7. Filter device according to claim 6, **characterised in that** the holding device (58) substantially covers the outer surface of the panel filter (40) and is designed to be largely water-permeable, in particular the holding device (58) bearing against the outside of the panel filter (40) with a holding surface designed as a sieve or mesh or with a ribbed structure or grid structure which corresponds to the outside of the support structure (48).

8. Filter device according to one of the preceding claims, **characterised in that** a movement path of the holding guide leads past the removal opening (67) according to claim 5.

9. Filter device according to one of claims 6 to 8, **characterised in that** the holding device (58) and/or the holding guide have a drive for moving the holding device (58) at or along the holding guide, wherein preferably the filter device (33) has a removal device for removing a flat filter (40) from or from the holding device (58), wherein in particular a supply of flat filters (40) is provided in a supply holder, and the supply holder has a supply opening for a panel filter (40) from the supply holder, which is arranged close to or directly at a removal opening (67) according to claim 5 or 8 on the filter housing (34), wherein preferably insertion means are provided for inserting a panel filter (40) into the filter housing (34) and placing it on the support structure (48) or inserting it into the holding device (58).

10. Water-carrying domestic appliance (11) with a filter device (33) according to one of the preceding claims, **characterised in that** the domestic appliance (11) has a treatment chamber (19) for objects (W) to be treated, a pump (25), water lines and the filter device (33), a pump outlet from the pump preferably being connected to the filter inlet (36) by means of a water line.

11. Water-carrying domestic appliance (11) according to claim 10, **characterised in that** a collection container for used panel filters (40') is provided under a removal opening (67) from the filter housing (34) according to claim 5 or 8, wherein preferably the collection container can be removed from the domestic appliance (11) through a closable appliance opening.

12. Water-carrying domestic appliance (11) according to claim 10 or 11, **characterised in that** the appliance opening is arranged on an accessible side of the domestic appliance (11), in particular on a front side.

13. Method for filtering water in a filter device (33) of a water-carrying domestic appliance (11) according to one of claims 10 to 12, **characterised by** the steps of
- in a normal operation of the domestic appliance (11), water is pumped by means of the pump (25) through the filter device (33) for filtering,
- for filtering the water, a flow of water through the filter device (33) is set up to a first limit value,
- in a replacement mode for replacing the panel filter (40) of the filter device (33), water is pumped through the filter device (33) by means of the pump (25) with a flow rate that is higher than the first limit value, preferably at least 50% higher than the first limit value,
- the pump (25) operates for a predetermined pumping time with the increased flow rate,
- then the operation of the pump (25) is stopped completely,
- whereby water is preferably partially, largely or completely removed from the filter housing (34),
- the panel filter (40') is then removed from the filter device (33) and the filter housing (34) and a new and unused panel filter (40) is inserted.

14. Method according to claim 13, **characterised in that** the removal of the panel filter (40') from the filter device (33) and from the filter housing (34) and/or the insertion of the new and unused panel filter (40) takes place automatically, preferably by means of the holding device (58) according to one of claims 6 to 9, which has a controllable drive for this purpose.

15. Method according to claim 14, **characterised in that** the removal of the panel filter (40') from the filter device (33) and from the filter housing (34) and/or the insertion of the new and unused panel filter (40) is carried out manually, preferably the holding device (58) according to one of claims 6 to 9 being actuated manually by an operator.

## Revendications

1. Dispositif de filtrage (33) pour un appareil ménager (11) utilisant de l'eau, le dispositif de filtrage (33) présentant :
- un filtre plat (40) en forme de manchon et
- une structure de support (48) pour le filtre plat (40),
- un boîtier de filtre (34) traversé par le courant avec une entrée de filtre (36) et une sortie de filtre (37),
- un dispositif de maintien (58) qui maintient le filtre plat (40) sur la structure de support (48) et qui s'applique au moins en partie contre le filtre plat (40),
où :
o le filtre plat (40) est maintenu sur la structure de support (48) et est maintenu de manière stable par celle-ci dans une forme de filtre plat adaptée à la forme extérieure de la structure de support (48),
o la structure de support (48) présente des ouvertures de passage (54) vers le filtre plat (40) et une ouverture centrale (56) à l'extrémité,
o une première voie d'écoulement pour l'eau, qui mène dans la structure de support (48), sort de la structure de support (48) par les ouvertures passage (54),
o une deuxième voie de passage pour l'eau, qui mène à l'intérieur de la structure de support (48), sort de la structure de support (48) par l'ouverture centrale (56) à l'extrémité de la structure de support (48),
o la structure de support (48) est périphérique et est formée par des nervures de support (50),
o les nervures de soutien (50) forment ou présentent entre elles les ouvertures de passage (54),
o le filtre plat (40) est fixé à l'extérieur de la structure de support (48) de telle sorte qu'il recouvre les ouvertures de passage (54) et s'applique à l'extérieur contre les nervures de support (50),
**caractérisé en ce que** :
il est prévu un guide de maintien pour le dispositif de maintien (58), le long duquel il peut être déplacé en étant guidé, le guide de maintien étant conçu de telle sorte que le dispositif de maintien (58)
- dans une première position finale, il maintient fermement le filtre plat (40) sur la structure de support (48), et
- dans une autre deuxième position finale, il libère le filtre plat (40) pour détacher complètement le filtre plat (40) de la structure de support (48) afin de retirer un filtre plat utilisé (40') et d'insérer un filtre plat frais non utilisé (40).

2. Dispositif de filtration selon la revendication 1, **caractérisé en ce qu'**une extrémité de la structure de support (48) orientée dans le sens de l'écoulement de l'eau à filtrer est fermée jusqu'à l'ouverture centrale (56), en particulier également sans filtre plat (40) monté sur celle-ci.

3. Dispositif de filtration selon la revendication 1 ou 2, **caractérisé en ce que** le filtre plat (40) présente un matériau filtrant choisi dans le groupe suivant : papier ou papier filtre, tissu, tissu à mailles, tricot, notamment constitué de fibres synthétiques.

4. Dispositif de filtration selon l'une des revendications précédentes, **caractérisé en ce que**, dans le sens d'écoulement de l'eau à filtrer, la structure de support (48) avec le filtre plat (40) vient dans le boîtier de filtre (34) en aval de l'entrée de filtre (36), la structure de support (48) avec le filtre plat (40) étant disposée dans le boîtier de filtre (34) de telle sorte que toute l'eau qui traverse le dispositif de filtrage (33) ou le filtre plat (40) est filtrée par la structure de support (48) s'écoule à travers le boîtier de filtre (34), s'écoule à travers la structure de support (48), la sortie de filtre (37) sort du boîtier de filtre (34), de préférence dans le sens de passage de l'eau à filtrer, la structure de support (48) avec le filtre plat (40) vient derrière l'entrée de filtre (36) dans le boîtier de filtre (34), la structure de support (48) avec le filtre plat (40) étant disposée dans le boîtier de filtre (34) de telle sorte que seule une partie de l'eau qui traverse le dispositif de filtrage (33) ou le filtre plat (40) est filtrée s'écoule à travers le boîtier de filtre (34), s'écoule à travers le filtre plat (40) le long du premier trajet d'écoulement, la sortie de filtre (37) sortant du boîtier de filtre (34), la partie restante de l'eau s'écoulant à travers le boîtier de filtre (34) le long du deuxième trajet d'écoulement en passant devant le filtre plat (40), en particulier au maximum 50% de l'eau s'écoulant à travers le boîtier de filtre (34) s'écoulant à travers le filtre plat (40).

5. Dispositif de filtration selon l'une des revendications précédentes, **caractérisé en ce que** le boîtier de filtre (34) peut être ouvert ou présente une ouverture de prélèvement (67) et un obturateur de boîtier de filtre (68) sur celui-ci, l'obturateur de boîtier de filtre (68) étant amovible ou conçu pour s'éloigner de l'ouverture de prélèvement (67), que le filtre plat (40) peut être enlevé de la structure de support (48) et peut être retiré du boîtier de filtre (34) pour être éliminé, un filtre plat (40) frais et non utilisé pouvant de préférence être amené sur la structure de support (48) par le chemin inverse.

6. Dispositif de filtration selon l'une des revendications précédentes, **caractérisé en ce que** le filtre plat (40) est maintenu entre le dispositif de maintien (58) et la structure de support (48), le dispositif de maintien (58) étant notamment prévu dans une zone d'extrémité du filtre plat (40) située à l'opposé de la direction d'écoulement le long du premier trajet d'écoulement, le dispositif de maintien (58) pouvant être retiré de la structure de support (48) de telle sorte que le filtre plat (40) est libre ou non, le dispositif de maintien (58) n'est plus en contact avec le filtre plat (40), le dispositif de maintien (58) étant de préférence en contact avec le filtre plat (40) en au moins deux points dans la direction circonférentielle du filtre plat (40), en particulier avec le filtre plat (40) pressé entre eux contre la structure de support (48), le dispositif de maintien (58) présentant de préférence au moins une bague de retenue périphérique, un agencement de la au moins une bague de retenue correspondant à l'agencement d'au moins une nervure de support (50), respectivement la bague de retenue est en contact avec la nervure de support (50).

7. Dispositif de filtration selon la revendication 6, **caractérisé en ce que** le dispositif de maintien (58) recouvre essentiellement la surface extérieure du filtre plat (40) et est réalisé largement perméable à l'eau, le dispositif de maintien (58) s'appuyant en particulier à l'extérieur sur le filtre plat (40) avec une surface de maintien réalisée sous forme de tamis ou de filet ou avec une structure nervurée ou une structure de grille qui correspond au côté extérieur de la structure de support (48).

8. Dispositif de filtration selon l'une des revendications précédentes, **caractérisé en ce qu'**un trajet de déplacement du guide de retenue passe devant l'ouverture de prélèvement (67) selon la revendication 5.

9. Dispositif de filtration selon l'une quelconque des revendications 6 à 8, **caractérisé en ce que** le dispositif de maintien (58) et/ou le guide de retenue comportent un entraînement pour déplacer le dispositif de maintien (58) sur ou le long du guide de retenue, de préférence le dispositif de filtrage (33) comportant un dispositif de prélèvement pour prélever un filtre plat (40) du dispositif de maintien (58) ou hors de celui-ci, en particulier une réserve de filtres plats (40) étant prévue dans un support de réserve, et le support de stockage présente une ouverture de stockage pour un filtre plat (40) provenant du support de stockage, qui est disposée à proximité ou directement à côté d'une ouverture de prélèvement (67) selon la revendication 5 ou 8 sur le boîtier de filtre (34), des moyens d'introduction étant de préférence prévus pour introduire un filtre plat (40) dans le boîtier de filtre (34) et pour l'appliquer sur la structure de support (48) ou pour l'insérer dans le dispositif de maintien (58).

10. Appareil ménager à eau (11) avec un dispositif de filtrage (33) selon l'une des revendications précédentes, **caractérisé en ce que** l'appareil ménager (11) comprend une chambre de traitement (19) pour les objets (W) à traiter, une pompe (25), des conduites d'eau et le dispositif de filtrage (33), une sortie de la pompe étant de préférence reliée à l'entrée du filtre (36) au moyen d'une conduite d'eau.

11. Appareil ménager à eau (11) selon la revendication 10, **caractérisé en ce qu'**un récipient de collecte pour les filtres plats usagés (40') est prévu sous une ouverture de prélèvement (67) dans le boîtier de filtre (34) selon la revendication 5 ou 8, le récipient de collecte pouvant de préférence être retiré de l'appareil ménager (11) par une ouverture d'appareil pouvant être fermée.

12. Appareil ménager à eau (11) selon la revendication 10 ou 11, **caractérisé en ce que** l'ouverture de l'appareil est disposée sur un côté accessible de l'appareil ménager (11), en particulier sur une face avant.

13. Procédé de filtration d'eau dans un dispositif de filtrage (33) d'un appareil ménager (11) contenant de l'eau selon l'une des revendications 10 à 12, **caractérisé par** les étapes consistant à:
- en fonctionnement normal de l'appareil ménager (11), de l'eau est pompée par la pompe (25) à travers le dispositif de filtrage (33) pour être filtrée,
- pour filtrer l'eau, un écoulement d'eau à travers le dispositif de filtrage (33) est réglé jusqu'à une première valeur limite,
- dans un mode de remplacement pour remplacer le filtre plat (40) du dispositif de filtrage (33), l'eau est pompée au moyen de la pompe (25) à travers le dispositif de filtrage (33) avec un débit qui est supérieur à la première valeur limite, de préférence supérieur d'au moins 50% à la première valeur limite,
- la pompe (25) fonctionne pendant une durée de pompage prédéterminée avec le débit accru,
- puis le fonctionnement de la pompe (25) est complètement arrêté,
- de préférence, l'eau est partiellement, en grande partie ou totalement éliminée du boîtier de filtre (34),
- ensuite, le filtre plat (40') est retiré du dispositif de filtrage (33) et du boîtier de filtre (34) et un nouveau filtre plat (40) inutilisé est mis en place.

14. Procédé selon la revendication 13, **caractérisé en ce que** le retrait du filtre plat (40') du dispositif de filtrage (33) et du boîtier de filtre (34) et/ou la mise en place du filtre plat (40) neuf et non utilisé s'effectue automatiquement, de préférence au moyen du dispositif de maintien (58) selon l'une des revendications 6 à 9, qui présente à cet effet un entraînement commandable.

15. Procédé selon la revendication 14, **caractérisé en ce que** le retrait du filtre plat (40') du dispositif de filtrage (33) et du boîtier de filtre (34) et/ou la mise en place du filtre plat (40) neuf et non utilisé s'effectue manuellement, le dispositif de maintien (58) selon l'une des revendications 6 à 9 étant de préférence actionné manuellement par un opérateur.
